# EUROPEAN PATENT APPLICATION

(11) **EP 4 703 663 A1**
(43) Date of publication of application: **04.03.2026**
(21) Application number: 25190731.7
(22) Date of filing: 21.07.2025
(51) Int. Cl.: F25J 3/04

(54) **METHOD FOR CONTROLLING HIGH BOILING POINT IMPURITY COMPONENTS IN ULTRA PURE OXYGEN**

(30) Priority: 27.08.2024 JP 2024145333
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: HIROSE, Kenji, Chuo-ku Kobe, 651-0087 (JP); NAGACHI, Masashi, Chuo-ku Kobe, 651-0087 (JP); NAGATA, Daisuke, Chuo-ku Kobe, 651-0087 (JP); TOMITA, Shinji, Chuo-ku Kobe, 651-0087 (JP)
(74) Representative: Air Liquide

(57) **Abstract**

A high-purity oxygen production apparatus comprises: a heat exchanger for cooling feed air; a first rectification column (2) comprising an introduction portion (L12) for introducing the cooled feed air and a discharge portion for discharging an oxygen-containing liquid, the first rectification column causing a reduction in a concentration of high-boiling-point impurities having a higher boiling point than oxygen in the oxygen-containing liquid, as compared to the concentration of high-boiling-point impurities in the feed air; a second rectification column (4) comprising an introduction portion for introducing the oxygen-containing liquid and a discharge portion for discharging high-purity oxygen, the second rectification column causing a reduction in a concentration of low-boiling-point impurities having a lower boiling point than oxygen in the high-purity oxygen, as compared to the concentration of low-boiling-point impurities in the oxygen-containing liquid; first piping (L2) for introducing, into the second rectification column, the oxygen-containing liquid discharged by the first rectification column, the first piping comprising a branch portion and a first valve (V1); and second piping (L3) which branches from the branch portion and comprises a second valve (V2), wherein the first valve adjusts a flow rate of the oxygen-containing liquid introduced into the second rectification column.

## Description

The present invention relates to a high-purity oxygen production apparatus. Furthermore, the present invention also relates to a method for producing high-purity oxygen, employing the high-purity oxygen production apparatus.

High-purity oxygen is liquefied oxygen with a very low content (e.g., less than 1 ppm by volume) of impurities (e.g., nitrogen, argon, neon, helium and methane). High-purity oxygen is especially important in the process of manufacturing semiconductors in the semiconductor industry.

Atmospheric air is normally used as a feed material in the production of high-purity oxygen. High-purity oxygen can be produced by reducing the concentration of impurities contained in atmospheric air.

For example, JP 2018-204825 A discloses a high-purity oxygen production apparatus comprising a rectification column for reducing the concentration of impurities in feed air.

The high-purity oxygen production apparatus needs to be suitably controlled so that high-purity oxygen of the desired quality is produced. In a conventional high-purity oxygen production apparatus, the quality of the produced high-purity oxygen is managed by analysing the concentration of impurities in the produced high-purity oxygen by using a means such as a Fourier transform infrared (FTIR) spectrometer or an atmospheric pressure ionization mass spectrometer (API-MS), which is capable of detecting impurities at the ppb level. Based on the results of this quality management, operation of the high-purity oxygen production apparatus is then controlled so that high-purity oxygen of the desired quality is produced. However, this kind of conventional apparatus and method employ costly means such as FTIR and API-MS, which is a considerable burden from a cost perspective. It is furthermore difficult to control the high-purity oxygen production apparatus in real time in accordance with the quality of the high-purity oxygen actually being produced.

The present disclosure addresses the problem of providing a high-purity oxygen production apparatus which can be efficiently controlled so that high-purity oxygen of the desired quality is produced.

### [Means for Solving the Problem]

The present inventors found that a high-purity oxygen production apparatus, which employs a first rectification column for generating an oxygen-containing liquid by reducing a concentration of high-boiling-point impurities in feed air, and a second rectification column for generating high-purity oxygen by reducing a concentration of low-boiling-point impurities in the oxygen-containing liquid, can be efficiently controlled by adjusting an oxygen concentration in the oxygen-containing liquid, and a flow rate of the oxygen-containing liquid introduced into the second rectification column, and thereby arrived at the present invention.

That is to say, the present disclosure provides the following high-purity oxygen production apparatus, for example:
[1] A high-purity oxygen production apparatus comprising: a heat exchanger for cooling feed air;
   a first rectification column comprising an introduction portion for introducing the cooled feed air and a discharge portion for discharging an oxygen-containing liquid, the first rectification column causing a reduction in a concentration of high-boiling-point impurities having a higher boiling point than oxygen in the oxygen-containing liquid, as compared to the concentration of high-boiling-point impurities in the feed air;
   a vessel comprising a nitrogen condenser located in an upper portion inside the first rectification column;
   a second rectification column comprising an introduction portion for introducing the oxygen-containing liquid and a discharge portion for discharging high-purity oxygen, the second rectification column causing a reduction in a concentration of low-boiling-point impurities having a lower boiling point than oxygen in the high-purity oxygen, as compared to the concentration of low-boiling-point impurities in the oxygen-containing liquid;
   first piping for introducing, into the second rectification column, the oxygen-containing liquid discharged by the first rectification column, the first piping comprising a branch portion and a first valve;
   second piping which branches from the branch portion and comprises a second valve; and
   a piping for extracting an oxygen-enriched liquid from a bottom of the first rectification column and introducing the oxygen-enriched liquid into the vessel comprising the nitrogen condenser,
   wherein
   the first valve adjusts a flow rate of the oxygen-containing liquid introduced into the second rectification column.

### [Effects of the Invention]

The high-purity oxygen production apparatus according to the present disclosure can be efficiently controlled so that high-purity oxygen of the desired quality is produced.

### [Brief Description of the Drawings]

Fig. 1 shows an exemplary configuration of a high-purity oxygen production apparatus according to the present disclosure.
Fig. 2 shows an example of a relationship between oxygen concentration in an oxygen-containing liquid discharged by a first rectification column and methane concentration in the oxygen-containing liquid; and a relationship between oxygen concentration in the oxygen-containing liquid discharged by the first rectification column and methane concentration in high-purity oxygen discharged by a second rectification column, in the high-purity oxygen production apparatus according to the present disclosure.
Fig. 3 shows another exemplary configuration of a high-purity oxygen production apparatus according to the present disclosure.

### [Embodiments of the Invention]

Embodiments of the present disclosure will be described in detail below, but the scope of the present invention is not limited to the embodiments described here, and various changes can be made without departing from the spirit of the present invention. Embodiments may be implemented individually or embodiments may be implemented in combination. Particular descriptions of one embodiment that are applicable to other embodiments will not be repeated for such other embodiments.

It should be noted that the numerical ranges in the present disclosure include the upper and lower limits, respectively, that are indicated with "-" and "from". For example, the expression "A-B" or "from A to B" using numerical values A and B means A or more to B or less. The expressions "A-B", "from A to B", and "A or more to B or less" that are used to indicate the stepwise numerical ranges in the present disclosure also independently include both "preferably A or more" and "preferably B or less", where the lower and upper limits may be replaced with other numerical range upper and lower limits. The lower or upper limits of the numerical ranges given in the present disclosure are numerical values within the numerical range, and may be replaced with the numerical values given in the examples or drawings.

### <High-purity oxygen production apparatus>

One embodiment discloses:
a high-purity oxygen production apparatus comprising: a heat exchanger for cooling feed air;
a first rectification column comprising an introduction portion for introducing the cooled feed air and a discharge portion for discharging an oxygen-containing liquid, the first rectification column causing a reduction in a concentration of high-boiling-point impurities having a higher boiling point than oxygen in the oxygen-containing liquid, as compared to the concentration of high-boiling-point impurities in the feed air;
a vessel comprising a nitrogen condenser located in an upper portion inside the first rectification column;
a second rectification column comprising an introduction portion for introducing the oxygen-containing liquid and a discharge portion for discharging high-purity oxygen, the second rectification column causing a reduction in a concentration of low-boiling-point impurities having a lower boiling point than oxygen in the high-purity oxygen, as compared to the concentration of low-boiling-point impurities in the oxygen-containing liquid;
first piping for introducing, into the second rectification column, the oxygen-containing liquid discharged by the first rectification column, the first piping comprising a branch portion and a first valve;
second piping which branches from the branch portion and comprises a second valve; and
a piping for extracting an oxygen-enriched liquid from a bottom of the first rectification column and introducing the oxygen-enriched liquid into the the vessel comprising the nitrogen condenser,
wherein
   the first valve adjusts a flow rate of the oxygen-containing liquid introduced into the second rectification column.

There is furthermore disclosed a method for producing high-purity oxygen in the abovementioned high-purity oxygen production apparatus, the method comprising controlling the content of impurities in produced high-purity oxygen by adjusting the oxygen concentration of the oxygen-containing liquid introduced into the second rectification column.

In a conventional high-purity oxygen production apparatus, the quality of the produced high-purity oxygen is managed by analysing the concentration of impurities in the produced high-purity oxygen by using a means such as a Fourier transform infrared (FTIR) spectrometer or an atmospheric pressure ionization mass spectrometer (API-MS), which is capable of detecting impurities at the ppb level. Based on the results of this quality management, operation of the high-purity oxygen production apparatus is then controlled so that high-purity oxygen of the desired quality is produced. Using the means above therefore requires high expenditure when a conventional high-purity oxygen production apparatus is used, and it is difficult to suitably control operation of the high-purity oxygen production apparatus in real time.

Meanwhile, the high-purity oxygen production apparatus according to the present disclosure is capable of efficiently producing high-purity oxygen of the desired quality, without quality management employing such costly means. Furthermore, it is a simple matter to suitably control operation of the high-purity oxygen production apparatus in real time so that high-purity oxygen of the desired quality is efficiently produced.

### (High-purity oxygen production apparatus further comprising flowmeter)

The high-purity oxygen production apparatus according to an embodiment may further comprise a flowmeter for measuring the flow rate of the oxygen-containing liquid introduced into the second rectification column through the first piping. In this case, a degree of opening of the first valve is preferably increased when the flow rate of the oxygen-containing liquid measured by the flowmeter is lower than a predetermined flow rate, and the degree of opening of the first valve is preferably reduced when the flow rate of the oxygen-containing liquid measured by the flowmeter is higher than the predetermined flow rate.

The high-purity oxygen production apparatus further comprising a flowmeter enables operation of the high-purity oxygen production apparatus to be controlled more efficiently on the basis of the flow rate of the oxygen-containing liquid measured by the flowmeter.

The predetermined flow rate mentioned above is preferably 1-30%, more preferably 1-25%, and particularly preferably 1-20% of the flow rate of the feed air.

The flowmeter may be provided at any position as long as the advantages of the present invention are achieved, but the flowmeter is preferably provided in the first piping between the branch portion of the first piping and the introduction portion of the second rectification column.

### (High-purity oxygen production apparatus further comprising oxygen concentration meter)

The high-purity oxygen production apparatus according to an embodiment may further comprise an oxygen concentration meter for measuring an oxygen concentration of the oxygen-containing liquid, or an oxygen concentration of vapour at the discharge portion of the first rectification column. In this case, a degree of opening of the second valve is preferably increased when the oxygen concentration of the oxygen-containing liquid measured by the oxygen concentration meter is lower than a predetermined concentration, and the degree of opening of the second valve is preferably reduced when the oxygen concentration of the oxygen-containing liquid measured by the oxygen concentration meter is higher than the predetermined concentration.

The high-purity oxygen production apparatus comprising an oxygen concentration meter enables operation of the high-purity oxygen production apparatus to be controlled more efficiently on the basis of the oxygen concentration of the oxygen-containing liquid or the oxygen concentration of vapour at the discharge portion of the first rectification column.

The predetermined concentration mentioned above is preferably in a range of 1-50%, more preferably 1-40%, and particularly preferably 1-30%.

The oxygen concentration meter may be provided at any position as long as the advantages of the present invention are achieved, but the oxygen concentration meter is preferably provided in the first piping between the discharge portion of the first rectification column and the branch portion of the first piping, or is provided at the discharge portion of the first rectification column.

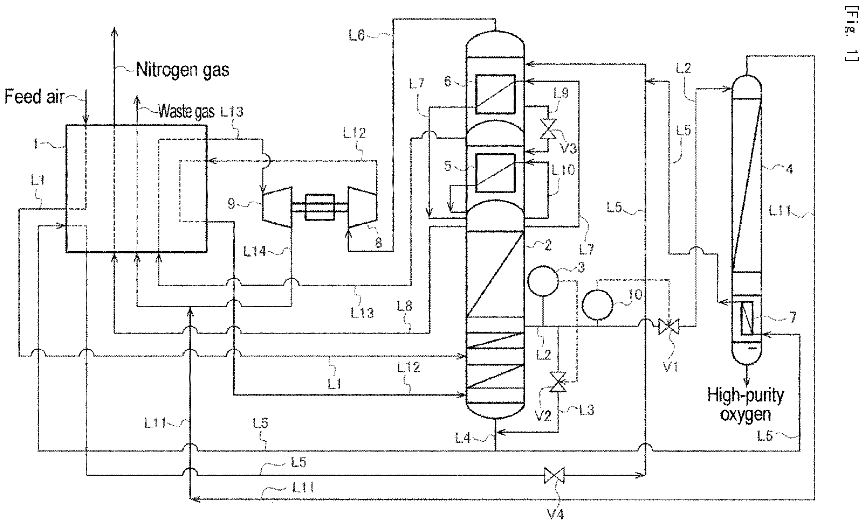

The high-purity oxygen production apparatus according to an embodiment, and the method for producing high-purity oxygen using the high-purity oxygen production apparatus will be described below in more specific terms with reference to fig. 1.

The high-purity oxygen production apparatus shown in fig. 1 is an apparatus for producing high-purity oxygen from feed air, and comprises: a heat exchanger 1, a first rectification column 2, a second rectification column 4, piping L2 (first piping), a valve V1 (first valve), piping L3 (second piping), a valve V2 (second valve), an oxygen concentration meter 3, and a flowmeter 10.

However, the configuration of the high-purity oxygen production apparatus of the present disclosure is not limited to the configuration shown in fig. 1. For example, the high-purity oxygen production apparatus shown in fig. 1 comprises the oxygen concentration meter 3 and the flowmeter 10, but the high-purity oxygen production apparatus of the present disclosure may comprise only either one of the oxygen concentration meter 3 and the flowmeter 10, or may equally not comprise either the oxygen concentration meter 3 or the flowmeter 10.

### <Feed air>

Feed air is typically air taken from the atmosphere around the apparatus, and is preferably air which is taken from the atmosphere around the apparatus, and which then has fine particles, moisture and carbon dioxide, etc. removed therefrom by known methods (e.g., removed by a filter, dryer, carbon dioxide remover and adsorber), and/or is compressed.

The feed air preferably contains the components contained in atmospheric air, namely nitrogen, oxygen, argon, neon, helium, and methane, etc., in the same proportions as in atmospheric air.

The feed air comprises: oxygen (boiling point -183° C); high-boiling-point impurities having a higher boiling point than oxygen; and low-boiling-point impurities having a lower boiling point than oxygen. Methane (boiling point - 161.6° C) may be cited as a non-limiting example of a high-boi ling-point impurity. Nitrogen (boiling point -195.8° C), argon (boiling point -185.8° C), neon (-246.08° C), and helium (boiling point -268.9° C) may be cited as non-limiting examples of low-boiling-point impurities.

### <Heat exchanger>

The heat exchanger 1 cools the feed air to generate a low-temperature gas. The low-temperature gas is delivered to the first rectification column 2 through the piping L1.

The feed air may be cooled in the first heat exchanger 1 by means of heat exchange between the feed air and a fluid in the piping passing through the heat exchanger 1.

### <First rectification column>

The first rectification column 2 comprises an introduction portion for introducing the low-temperature gas, and a discharge portion for discharging an oxygen-containing liquid. The first rectification column 2 causes a reduction in the concentration of high-boiling-point impurities in the oxygen-containing liquid, as compared to the concentration of high-boiling-point impurities in the feed air.

More specifically, the low-temperature gas is introduced into the first rectification column 2 through the piping L1 connected to the introduction portion. The low-temperature gas which has been introduced rises inside the first rectification column 2 as vapour. Rectification is performed by means of gas-liquid contact between the rising vapour and a reflux liquid which is supplied from L7 and L10 (to be described later) and falls inside the first rectification column 2. That is to say, the first rectification column 2 produces an oxygen-enriched liquid flowing down to the bottom, and causes rectification and separation of nitrogen gas (nitrogen component) at the top.

The discharge portion for discharging the oxygen-containing liquid is provided in a central portion of the first rectification column 2. The oxygen-containing liquid and the vapour are preferably in a state of gas-liquid equilibrium at the discharge portion, and, accordingly, the oxygen-containing liquid preferably constitutes a portion of the reflux liquid, which is in a state of gas-liquid equilibrium with the vapour at the discharge portion.

The high-boiling-point impurities (e.g., methane) contained in the feed air are concentrated in the oxygen-enriched liquid which is produced flowing down to the bottom of the first rectification column 2. Accordingly, the concentration of high-boiling-point impurities in the oxygen-containing liquid at the discharge portion is reduced in comparison with the concentration of high-boiling-point impurities in the feed air.

The oxygen-enriched liquid which is rich in high-boiling-point impurities can be extracted from the bottom of the first rectification column 2 through piping L4.

The oxygen-enrichrf liquid extracted through the piping L4 is introduced into a vessel, which internally comprises a nitrogen condenser 6 located in an upper portion inside the first rectification column, from piping L5 via the heat exchanger 1 or via an oxygen vaporizer 7. Heat exchange takes place inside this vessel between the oxygen-enriched liquid and nitrogen gas in piping L7 which passes through the nitrogen condenser 6.

By means of the heat exchange, a portion of the oxygen-enriched liquid is vaporized, and nitrogen gas inside the piping L7 passing through the nitrogen condenser 6 is liquefied. The gas produced by vaporization can be extracted from piping L6 connected to the top of the first rectification column 2. Furthermore, the liquefied nitrogen gas in the piping L7 is returned to the first rectification column 2 as part of the reflux liquid.

Furthermore, another portion of the oxygen-enriched liquid is introduced, through piping L9 along which a valve V3 is fitted, into a vessel internally comprising a nitrogen condenser 5, which is located below the vessel internally comprising the nitrogen condenser 6. Heat exchange also takes place in the vessel internally comprising the nitrogen condenser 5, in the same way as in the vessel internally comprising the nitrogen condenser 6, but the gas produced by vaporization in the vessel internally comprising the nitrogen condenser 5 is expelled as waste gas to outside the high-purity oxygen production apparatus through piping L13.

The first rectification column 2 may have any configuration to the extent that the effects of the present invention are still achieved. The first rectification column 2 may be a known rectification column, e.g. it may be packed with a packing material, or may be provided with trays. Furthermore, the first rectification column 2 may comprise one rectification column or may comprise a plurality of rectification columns. A rectification column comprising one or more of a high-pressure column, a medium-pressure column, a low-pressure column, a crude argon column, and a pure argon column may be cited as a non-limiting example of the first rectification column 2.

### <Second rectification column>

The second rectification column 4 comprises an introduction portion for introducing the oxygen-containing liquid through the piping L2, and a discharge portion for discharging high-purity oxygen. The second rectification column 4 causes a reduction in the concentration of low-boiling-point impurities in the high-purity oxygen, as compared to the concentration of low-boiling-point impurities in the oxygen-containing liquid.

More specifically, the oxygen-containing liquid is introduced into the second rectification column 4 through the piping L2 connected to the introduction portion. Rectification is performed inside the second rectification column 4 by means of gas-liquid contact between rising vapour and a reflux liquid which is supplied from L2 (to be described later) and falls inside the second rectification column 4. That is to say, the second rectification column 4 produces high-purity oxygen flowing down to the bottom. The high-purity oxygen generated by this means can be extracted from the bottom of the second rectification column 4. Furthermore, the low-boi ling-point impurities contained in the rising vapour are discharged from the second rectification column 4 through piping L11 connected to the top of the second rectification column 4, and expelled to outside the apparatus.

The second rectification column 4 may have any configuration to the extent that the effects of the present invention are still achieved. The second rectification column 4 may be a known rectification column, e.g. it may be packed with a packing material, or may be provided with trays. The second rectification column 4 may comprise one rectification column or may comprise a plurality of rectification columns.

### <First and second piping, and first and second valves>

The piping L2 (first piping) introduces the oxygen-containing liquid discharged by the first rectification column 2 into the second rectification column 4. The piping L2 comprises a branch portion.

The piping L3 (second piping) branches from the branch portion provided in the piping L2. The piping L3 supplies the oxygen-containing liquid supplied from the piping L2 to the piping L4. The oxygen-containing liquid which has been supplied merges inside the piping L4 with the oxygen-enriched liquid extracted from the bottom of the first rectification column 2.

The valve V1 (first valve) is provided in the piping L2. The valve V1 is provided between the branch portion and the second rectification column 4 in the apparatus illustrated in fig. 1, but this is not limiting, and the valve V1 may equally be provided between the first rectification column 2 and the branch portion, for example.

The valve V2 (second valve) is provided in the piping L3.

The valve V1 is capable of controlling the apparatus by adjusting a flow rate of the oxygen-containing liquid in the piping L2 in accordance with the flow rate measured by means of the flowmeter 10. The control will be described in detail later.

The valve V2 is capable of controlling the apparatus by adjusting the flow rate of the oxygen-containing liquid in the piping L2 in accordance with an oxygen concentration measured by means of the oxygen concentration meter 3, to thereby adjust the oxygen concentration in the oxygen-containing liquid introduced into the second rectification column 2. The control will be described in detail later.

### <Flowmeter>

The flowmeter 10 measures the flow rate of the oxygen-containing liquid introduced into the second rectification column 4 through the piping L2.

In the high-purity oxygen production apparatus shown in fig. 1, the flowmeter 10 is provided in the piping L2 between the branch portion with the piping L3 and the valve V1, but the position at which the flowmeter 10 is provided is not limited to this, and it may be provided at any position to the extent that the effects of the present invention are still achieved.

Any device may be used as the flowmeter 10 to the extent that the effects of the present invention are still achieved. For example, the flowmeter 10 may be an orifice-type flowmeter.

### <Oxygen concentration meter>

The oxygen concentration meter 3 measures the oxygen concentration of the oxygen-containing liquid discharged by the first rectification column 2 (to be described later) or the oxygen concentration of the vapour at the discharge portion of the first rectification column 2 which discharges the oxygen-containing liquid.

In the high-purity oxygen production apparatus shown in fig. 1, the oxygen concentration meter 3 is provided in the piping L2 between the discharge portion from which the first rectification column 2 discharges the oxygen-containing liquid, and the branch portion with the piping L3. However, the position at which the oxygen concentration meter 3 is provided is not limited to this, and it may be provided at any position to the extent that the effects of the present invention are still achieved.

For example, the oxygen concentration meter 3 may be provided directly at the discharge portion, in which case the oxygen concentration meter 3 may measure the oxygen concentration of the vapour at the discharge portion. Note that the oxygen-containing liquid is preferably in a state of gas-liquid equilibrium with the vapour at the discharge portion. Accordingly, the oxygen concentration of the oxygen-containing liquid discharged by the first rectification column 2 preferably matches the oxygen concentration of the vapour at the discharge portion of the first rectification column 2 from which the oxygen-containing liquid is discharged.

Any device may be used as the oxygen concentration meter 3 to the extent that the effects of the present invention are still achieved. The oxygen concentration meter 3 may be, for example, a relatively inexpensive oxygen concentration meter used for the purpose of detecting 0.01-100 volume oxygen concentrations, and may be a zirconia oxygen concentration meter, for example.

### <Operation of high-purity oxygen production apparatus>

The high-purity oxygen production apparatus illustrated in fig. 1 operates in the following manner.

### (Production of high-purity oxygen)

The feed air is first of all introduced into the apparatus through the piping L1 and cooled by means of the heat exchanger 1, then the cooled feed air is supplied to the first rectification column 2.

The concentration of high-boiling point impurities (e.g., methane) is reduced and the oxygen-containing liquid is generated in the first rectification column 2.

The oxygen-containing liquid is supplied to the second rectification column 4 through the piping L2.

The concentration of low-boiling-point impurities is reduced and high-purity oxygen is generated in the second rectification column 4. This is then extracted from the bottom of the second rectification column 4 to thereby produce high-purity oxygen.

### (Control of high-purity oxygen production apparatus by means of flowmeter)

The degree of opening of the valve V1 is increased when the flow rate of the oxygen-containing liquid measured by the flowmeter 10 is lower than a predetermined flow rate, and the degree of opening of the valve V1 is reduced when the flow rate of the oxygen-containing liquid measured by the flowmeter 10 is higher than the predetermined flow rate. The predetermined flow rate is preferably 1-30%, more preferably 1-25%, and particularly preferably 1-20% of the flow rate of the feed air.

By this means, the high-purity oxygen production apparatus can be controlled so that a fixed amount of oxygen-containing liquid is introduced into the second rectification column 4.

In the high-purity oxygen production apparatus illustrated in fig. 1, the flowmeter 10 is provided between the branch portion of the piping L2 and piping L3, and the valve V1, but this is not limiting, and the flowmeter 10 may be provided at any position as long as the effects of the present invention are still achieved.

### (Control of high-purity oxygen production apparatus by means of oxygen meter)

The degree of opening of the valve V2 is increased when the oxygen concentration of the oxygen-containing liquid measured by the oxygen concentration meter 3 is lower than a predetermined concentration, and the degree of opening of the valve V2 is reduced when the oxygen concentration of the oxygen-containing liquid measured by the oxygen concentration meter 3 is higher than the predetermined concentration. The predetermined concentration is preferably in a range of 1-50% mol oxygen, more preferably 1-40% mol oxygen, and particularly preferably 1-30% mol oxygen.

Based on the oxygen concentration measured by the oxygen concentration meter 3, the valve V2 increases the flow rate of the oxygen-containing liquid suppl ied to the piping L4 when there is a drop in the oxygen concentration of the oxygen-containing liquid. The amount of liquid (reflux liquid) being rectified in the first rectification column 2 decreases as a result, and there is a drop in rectification efficiency. That is to say, there is a drop in the efficiency of separating the oxygen-enriched liquid , and nitrogen gas (nitrogen component) in the first rectification column 2, so the oxygen concentration of the oxygen-containing liquid rises. Conversely, the valve V2 reduces the flow rate of the oxygen-containing liquid supplied to the piping L4 when the oxygen concentration of the oxygen-containing liquid rises, thereby reducing the oxygen concentration of the oxygen-containing liquid.

Impurities in the high-purity oxygen generated in the second rectification column 4 originate from the impurities in the oxygen-containing liquid generated in the first rectification column 2, and there is a positive correlation between the concentration of impurities in the oxygen-containing liquid and the oxygen concentration of the oxygen-containing liquid. That is to say, there is a positive correlation between the concentration of impurities in the high-purity oxygen and the oxygen concentration of the oxygen-containing liquid.

The high-purity oxygen production apparatus comprising the oxygen concentration meter 3 is therefore capable of suitably controlling the concentration of impurities in the produced high-purity oxygen based on the oxygen concentration of the oxygen-containing liquid which is measured by the oxygen concentration meter 3. Furthermore, as indicated above, the oxygen concentration of the oxygen-containing liquid preferably matches the oxygen concentration of the vapour at the discharge portion of the first rectification column 2, so the high-purity oxygen production apparatus comprising the oxygen concentration meter 3 is capable of suitably controlling the concentration of impurities in the produced high-purity oxygen based on the oxygen concentration of the vapour at the discharge portion of the first rectification column 2 which is measured by the oxygen concentration meter 3.

A relationship of correlation between the oxygen concentration of the oxygen-containing liquid and the concentration of impurities in the oxygen-containing liquid or the high-purity oxygen may be obtained by means of a simulation based on the configuration of the apparatus and components of the feed air, and/or by actual measurement of the oxygen concentration of the oxygen-containing liquid and the concentration of impurities in the high-purity oxygen in the high-purity oxygen production apparatus operating in a steady state.

Furthermore, the composition of the impurities in the produced high-purity oxygen is normally constant, so when the concentration of a specific impurity component (e.g., methane) in the high-purity oxygen has been evaluated on the basis of the oxygen concentration of the oxygen-containing liquid, it is possible to calculate the total concentration of impurities in the high-purity oxygen from the concentration of that specific component.

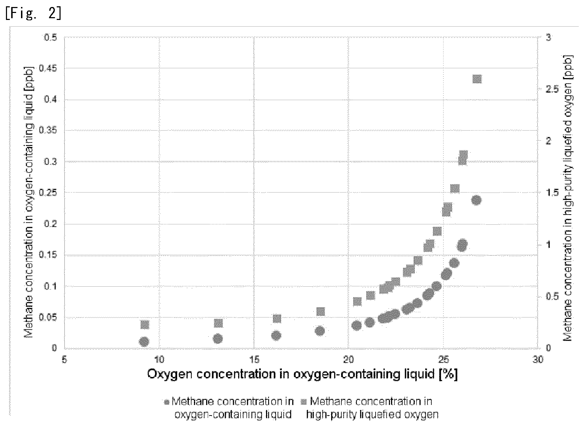

For example, a relationship of correlation between the oxygen concentration of the oxygen-containing liquid and the methane concentration in the oxygen-containing liquid or the high-purity oxygen may be obtained using the production apparatus shown in fig. 1 by means of a simulation based on the configuration of the apparatus and components of the feed air. Based on this simulation, the relationship with the methane concentration in the oxygen-containing liquid or the high-purity oxygen is plotted in fig. 2.

The plots shown in fig. 2 indicate that there is a positive correlation between the oxygen concentration of the oxygen-containing liquid and the methane concentration of the oxygen-containing liquid, and a positive correlation between the oxygen concentration of the oxygen-containing liquid and the methane concentration of the high-purity oxygen.

A relationship of correlation between the oxygen concentration of the oxygen-containing liquid measured by means of the oxygen concentration meter 3, and the concentration of impurities (or a specific impurity component) in the high-purity oxygen can therefore be suitably determined in the high-purity oxygen production apparatus comprising an oxygen flow meter according to the present disclosure. Furthermore, by using this relationship, the concentration of impurities (or a specific impurity component) in the high-purity oxygen can be evaluated on the basis of the oxygen concentration of the oxygen-containing liquid.

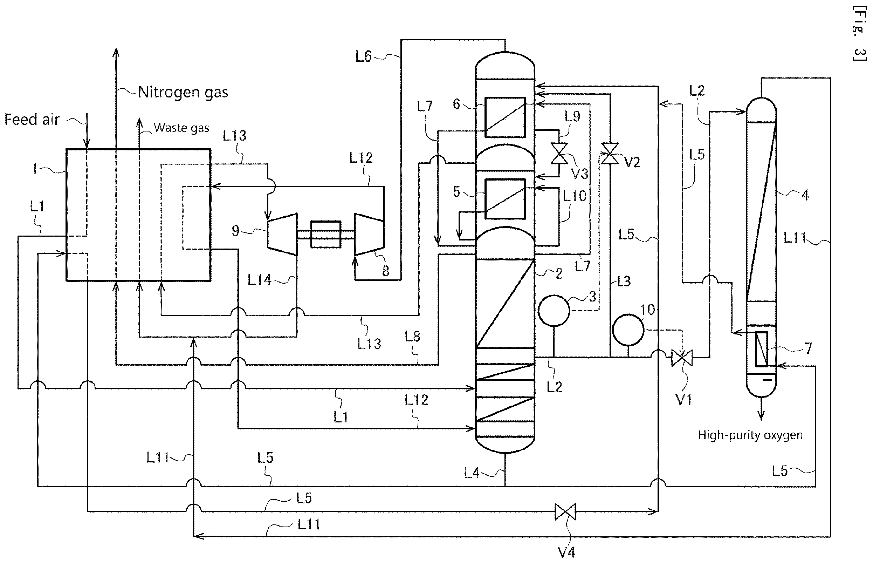

Fig. 3 shows another exemplary configuration of the high-purity oxygen production apparatus. The same symbols as in Fig. 1 are used to denote the same functions. The high-purity oxygen production apparatus in Fig. 3 has the same configuration as that in Figure 1, except for a piping L3 (second piping), and operates in the same manner.

The piping L3 (second piping) branches from the branch portion of the piping L2. The piping L3 directly supplies the oxygen-containing liquid supplied from piping L2 to the vessel comprising the nitrogen condenser 6. In addition, the piping L3 (second pipe) may supply the oxygen-containing liquid to the vessel through a subcooler.

The valve V2 increases the flow rate of the oxygen-containing liquid supplied to the vessel when the oxygen concentration of the oxygen-containing liquid decreases, based on the oxygen concentration measured by the oxygen concentration meter 3. As a result, the amount of liquid (reflux liquid) being rectified in the first rectification column 2 decreases, thereby reducing the efficiency of rectification. In other words, the efficiency of separating the oxygen-enriched liquid and nitrogen gas (nitrogen component) in the first rectification column 2 decreases, causing the oxygen concentration in the oxygen-containing liquid to increase.

Conversely, when the oxygen concentration of the oxygen-containing liquid increases, the valve V2 reduces the flow rate of the oxygen-containing liquid supplied to the vessel, thereby reducing the oxygen concentration of the oxygen-containing liquid. In this way, the production apparatus of Fig. 3 can effectively control the process to produce high-purity oxygen with the desired quality. The oxygen concentration meter 3 may measure an oxygen concentration of vapour at the discharge portion of the first rectification column 2.

A non-limiting list of exemplary embodiments and combinations of exemplary embodiments of the present disclosure is given below.
[1] A high-purity oxygen production apparatus comprising: a heat exchanger for cooling feed air;
   a first rectification column comprising an introduction portion for introducing the cooled feed air and a discharge portion for discharging an oxygen-containing liquid, the first rectification column causing a reduction in a concentration of high-boiling-point impurities having a higher boiling point than oxygen in the oxygen-containing liquid, as compared to the concentration of high-boiling-point impurities in the feed air;
   a vessel comprising a nitrogen condenser located in an upper portion inside the first rectification column;
   a second rectification column comprising an introduction portion for introducing the oxygen-containing liquid and a discharge portion for discharging high-purity oxygen, the second rectification column causing a reduction in a concentration of low-boiling-point impurities having a lower boiling point than oxygen in the high-purity oxygen, as compared to the concentration of low-boiling-point impurities in the oxygen-containing liquid;
   first piping for introducing, into the second rectification column, the oxygen-containing liquid discharged by the first rectification column, the first piping comprising a branch portion and a first valve;
   second piping which branches from the branch portion and comprises a second valve; and
   a piping for extracting an oxygen-enriched liquid from a bottom of the first rectification column and introducing the oxygen-enriched liquid into the vessel comprising the nitrogen condenser,
   wherein
      the first valve adjusts a flow rate of the oxygen-containing liquid introduced into the second rectification column.
[2] The high-purity oxygen production apparatus according to [1], wherein the second piping merges with the piping for extracting the oxygen-enriched liquid from a bottom of the first rectification column and supplies the oxygen-containing liquid to the piping.
[3] The high-purity oxygen production apparatus according to [1], wherein the second piping supplies the oxygen-containing liquid to the vessel comprising the nitrogen condenser.
[4] The high-purity oxygen production apparatus according to any of [1] to [3], further comprising a flowmeter for measuring the flow rate of the oxygen-containing liquid introduced into the second rectification column through the first piping, wherein
   a degree of opening of the first valve is increased when the flow rate of the oxygen-containing liquid measured by the flowmeter is lower than a predetermined flow rate, and the degree of opening of the first valve is reduced when the flow rate of the oxygen-containing liquid measured by the flowmeter is higher than the predetermined flow rate.
[5 ] The high-purity oxygen production apparatus as disclosed in [4 ], wherein the predetermined flow rate is 1-30%, preferably 1-25%, still more preferably 1-20% of the flow rate of the feed air.
[6 ] The high-purity oxygen production apparatus as disclosed in [4 ] or [5 ], wherein the flowmeter is provided in the first piping between the branch portion of the first piping and the introduction portion of the second rectification column.
[7 ] The high-purity oxygen production apparatus as disclosed in any of [1] to [6 ], further comprising an oxygen concentration meter for measuring an oxygen concentration of the oxygen-containing liquid, or an oxygen concentration of vapour at the discharge portion of the first rectification column, wherein
   a degree of opening of the second valve is increased when the oxygen concentration of the oxygen-containing liquid measured by the oxygen concentration meter is lower than a predetermined concentration, and the degree of opening of the second valve is reduced when the oxygen concentration of the oxygen-containing liquid measured by the oxygen concentration meter is higher than the predetermined concentration.
[8 ] The high-purity oxygen production apparatus as disclosed in [7 ], wherein the predetermined concentration is in a range of 1-50%.
[9 ] The high-purity oxygen production apparatus as disclosed in [7 ] or [8 ], wherein the oxygen concentration meter is provided in the first piping between the discharge portion of the first rectification column and the branch portion of the first piping, or is provided at the discharge portion of the first rectification column.
[10] The high-purity oxygen production apparatus according to any of [1] to [9], wherein at least one additional vessel comprising a nitrogen condenser is located below the vessel comprising the nitrogen condenser located in the upper portion inside the first rectification column.
[11 ] A method for producing high-purity oxygen in the high-purity oxygen production apparatus according to any of [1] to [10 ], the method comprising controlling the content of impurities in produced high-purity oxygen by adjusting the oxygen concentration of the oxygen-containing liquid introduced into the second rectification column.

Optionally:
- oxygen enriched liquid is used to reboil the second rectification column before being sent to the nitrogen condenser.
- a mixture of oxygen enriched liquid and oxygen containing liquid is used to reboil the second rectification column before being sent to the nitrogen condenser.
- part of the oxygen enriched liquid is subcooled in a main heat exchanger, in which the feed air is cooled, before being sent to the nitrogen condenser and part of the oxygen enriched liquid is cooled in a bottom reboiler of the second rectification column before being sent to the nitrogen condenser.
- the amount of oxygen containing liquid mixed with the oxygen enriched liquid is varied depending on the oxygen concentration of the oxygen containing liquid.

The constituent parts and combinations thereof in the embodiments are examples, and constituent parts may be added, omitted, substituted or modified in any other way within a scope that does not depart from the main point of the present disclosure.

### [Reference Signs List]

- 1: Heat exchanger
- 2: First rectification column
- 3: Oxygen concentration meter
- 4: Second rectification column
- 5: Nitrogen condenser
- 6: Nitrogen condenser
- 7: Oxygen vaporizer
- 8: Recycled air compressor
- 9: Expansion turbine
- 10: Flowmeter
- L1-L14: Piping
- V1-V4: Valve

## Claims

1. High-purity oxygen production apparatus comprising: a heat exchanger for cooling feed air;
a first rectification column (2) comprising an introduction portion for introducing the cooled feed air and a discharge portion for discharging an oxygen-containing liquid, the first rectification column causing a reduction in a concentration of high-boiling-point impurities having a higher boiling point than oxygen in the oxygen-containing liquid, as compared to the concentration of high-boiling-point impurities in the feed air;
a vessel comprising a nitrogen condenser (6) located in an upper portion inside the first rectification column;
a second rectification column (4) comprising an introduction portion for introducing the oxygen-containing liquid and a discharge portion for discharging high-purity oxygen, the second rectification column causing a reduction in a concentration of low-boiling-point impurities having a lower boiling point than oxygen in the high-purity oxygen, as compared to the concentration of low-boiling-point impurities in the oxygen-containing liquid;
first piping (L2)for introducing, into the second rectification column, the oxygen-containing liquid discharged by the first rectification column, the first piping comprising a branch portion and a first valve (V1); and
second piping (L3) which branches from the branch portion and comprises a second valve (V2); and
a piping (L4, L5) for extracting an oxygen-enriched liquid from the bottom of the first rectification column and introducing the oxygen-enriched liquid into the vessel comprising the nitrogen condenser,, wherein
the first valve adjusts a flow rate of the oxygen-containing liquid introduced into the second rectification column.

2. Apparatus according to claim 1, wherein the second piping (L3) merges with the piping (L4) for extracting the oxygen-enriched liquid from the bottom of the first rectification column (2) and suppl ies the oxygen-containing liquid to the piping.

3. Apparatus according to claim 1, wherein the second piping (L3) supplies the oxygen-containing liquid to the vessel comprising the nitrogen condenser.

4. Apparatus according to any preceding claim further comprising a flowmeter (10) for measuring the flow rate of the oxygen-containing liquid introduced into the second rectification column (4) through the first piping, wherein
a degree of opening of the first valve (V1) is increased when the flow rate of the oxygen-containing liquid measured by the flowmeter is lower than a predetermined flow rate, and the degree of opening of the first valve is reduced when the flow rate of the oxygen-containing liquid measured by the flowmeter is higher than the predetermined flow rate.

5. Apparatus according to Claim 4, wherein the predetermined flow rate is 1-30%, preferably 1-25%, still more preferably 1-20%, of the flow rate of the feed air.

6. Apparatus according to Claim 4, wherein the flowmeter is provided in the first piping (L1) between the branch portion of the first piping and the introduction portion of the second rectification column (4).

7. Apparatus according to Claim 4, further comprising an oxygen concentration meter (3) for measuring an oxygen concentration of the oxygen-containing liquid, or an oxygen concentration of vapour at the discharge portion of the first rectification column, wherein
a degree of opening of the second valve (V2) is increased when the oxygen concentration of the oxygen-containing liquid measured by the oxygen concentration meter is lower than a predetermined concentration, and the degree of opening of the second valve is reduced when the oxygen concentration of the oxygen-containing liquid measured by the oxygen concentration meter is higher than the predetermined concentration.

8. Apparatus according to Claim 7, wherein the predetermined concentration is in a range of 1-50% mol oxygen.

9. Apparatus according to Claim 7, wherein the oxygen concentration meter (10) is provided in the first piping (L2) between the discharge portion of the first rectification column (2) and the branch portion of the first piping, or is provided at the discharge portion of the first rectification column.

10. Apparatus according to any preceding claim, wherein at least one additional vessel comprising a nitrogen condenser (5) is located below the vessel comprising the nitrogen condenser located in the upper portion inside the first rectification column.

11. Method for producing high-purity oxygen in the apparatus according to any one of Claims 1 to 10, the method comprising controlling the content of impurities in produced high-purity oxygen by adjusting the flowrate of the oxygen-containing liquid introduced into the second rectification column (4).

12. Method according to Claim 11 wherein oxygen enriched liquid is used to reboil the second rectification column before being sent to the nitrogen condenser.

13. Method according to Claim 12 wherein a mixture of oxygen enriched liquid and oxygen containing liquid is used to reboil the second rectification column before being sent to the nitrogen condenser.

14. Method according to any of claims 11 to 13 wherein part of the oxygen enriched liquid is subcooled in a main heat exchanger (1), in which the feed air is cooled, before being sent to the nitrogen condenser (6) and part of the oxygen enriched liquid is cooled in a bottom reboiler (7) of the second rectification column (4) before being sent to the nitrogen condenser.

15. Method according to any of claims 11 to 14 wherein the amount of oxygen containing liquid mixed with the oxygen enriched liquid is varied depending on the oxygen concentration of the oxygen containing liquid.
